# EUROPEAN PATENT SPECIFICATION

(11) **EP 2 546 551 B1**
(45) Date of publication and mention of the grant of the patent: **16.08.2017**
(21) Application number: 12175540.9
(22) Date of filing: 09.07.2012
(51) Int. Cl.: F16H 57/04, F16H 57/027, F16H 59/38, F16H 57/02, F16H 57/035

(54) **Power unit for a small vehicle**
Leistungseinheit für ein Kleinfahrzeug
Unité de puissance pour un véhicule de petite taille

(30) Priority: 13.07.2011 JP 2011154464
(43) Date of publication of application: 16.01.2013
(73) Proprietor: Honda Motor Co., Ltd., Tokyo 107-8556 (JP)
(72) Inventor: Inomoto, Yutaka, Saitama, 351-0193 (JP); Tsuchiya, Ryuji, Saitama, 351-0193 (JP); Matsuura, Kohei, Saitama, 351-0193 (JP)
(74) Representative: Ilgart, Jean-Christophe

(56) References cited:
- JP-A- H01 197 194
- US-A- 4 468 979

## Description

### [Technical Field]

The present invention relates to a power unit for a small vehicle including a gear chamber which is formed within a gear case fixed on an engine body including a crankcase having a crank chamber formed therein, is isolated from the crank chamber, and contains a gear mechanism having a drive gear to which a power is transmitted from the crankshaft rotatably supported in the crankcase, a final gear installed on the axle of a drive wheel and a counter gear disposed between the final gear and the drive gear and, more particularly, to improved lubricating structure of a gear chamber.

### [Background Art]

Lubricating structure in which oil splashed by the gear is collected and guided for lubrication by use of a rib or the like in the gear chamber to which oil is not applied from an oil source such as an oil pump has already been known from Patent Literature 1 and Patent Literature 2.

### [Citation List]

### [Patent Literature]

[Patent Literature 1] JP-A No. H04-277361
[Patent Literature 2] US4468979 A, which discloses a power unit according to the preamble of claim 1.

### [Summary of Invention]

### [Technical Problem]

In the disclosure of the above-described Patent Literature 1, however, the rotation axis of the final gear of the gears making up the gear mechanism is located downward those of other gears, so that lubrication is performed by splashing oil from the final gear. As a result, the splash lubrication of gears can be possible but rotation friction produced by stirring the oil with the final gear is not considered. Therefore, the rotation friction is still a technical problem that needs to be addressed.

The present invention has been made in light of such circumstances and an object thereof is to provide lubrication structure of a gear chamber in a power unit for a small vehicle, which ensures splash lubrication performances and is capable of reducing rotation friction.

### [Solution to Problem]

To attain this object, a first aspect of the present invention provides a power unit for a small vehicle including a gear chamber that is formed within a gear case attached to an engine body including a crankcase with a crank chamber formed therein and is isolated from the crank chamber, and a gear mechanism that has a drive gear to which power is transmitted from a crankshaft rotatably supported in the crankcase, a final gear mounted on an axle of a drive wheel, and counter gears arranged between the final gear and the drive gear and is contained within the gear chamber, wherein a rotation axis of the final gear having a lower portion immersed in oil stored in a lower portion within the gear chamber is placed at a higher level than rotation axes of the drive gear and the counter gears, an oiling rib placed above the final gear and extending toward the final gear protrudes into the gear case, and the gear case is provided with an oil guide wall formed in an arc shape along tooth tips of the final gear to guide oil stored in the lower portion within the gear chamber to the oiling rib.

In addition to the structure of the first aspect, a second aspect of the present invention is that the gear case is attached to a rear portion of a power-transmission case adjoining the crankcase, extending toward a side of the drive wheel and containing a belt-type continuously variable transmission placed between the crankshaft and the drive gear, and a breather chamber extending in an up-and-down direction is formed above the drive gear and the counter gears and in front of the final gear in the gear case.

In addition to the structure of the second aspect, a third aspect of the present invention is that the oiling rib placed between the breather chamber and the oil guide wall is hung down from a ceiling wall of the gear case and has a leading end placed near the tooth tips of the final gear.

In addition to the structure of the third aspect, a fourth aspect of the present invention is that the gear case includes a main case forming a part of the power-transmission case and integrally adjoining the crankcase, and a cover coupled to a rear portion of the main case and causing the gear chamber to be formed between the main case and the cover, one end of the axle is rotatably supported through a bearing member by the main case, the final gear is mounted on the axle in a position closer to the bearing member, and the main case is provided with a surrounding wall extending toward the final gear and surrounding the axle at least from below, and introduction walls placed below the oiling rib to guide oil toward the surrounding wall.

In addition to the structure of the fourth aspect, a fifth aspect of the present invention is that the introduction walls are formed to extend in a fore-and-aft direction.

In addition to the structure of the second aspect, a sixth aspect of the present invention is that the oiling rib protrudes into the main case, and a sensor placed between the guide wall and the oiling rib on a downstream side of the oil guide wall in a flow direction of oil flowing between the oil guide wall and the final gear is mounted to the main case and has a leading end placed near tooth tips of the final gear.

Note that the second cover 60 in the embodiment corresponds to the cover of the present invention, the ball bearing 100 in the embodiment corresponds to the bearing member of the present invention, the wheel speed sensor 135 in the embodiment corresponds to the sensor of the present invention, and the rear wheel WR in the embodiment corresponds to the drive wheel of the present invention.

### [Advantageous Effects of Invention]

According to the first aspect of the present invention, because the rotation axis of the final gear having a lower portion immersed into the oil stored in a lower portion of the gear chamber is placed at a higher level than the rotation axes of the other gears in the gear chamber and the gear case is provided with the oil guide wall of an arc shape along tooth tips of the final gear, rotational friction is reduced by decreasing the area of the final gear immersed into the oil and reducing the amount of oil delivered to the final gear. The splashed oil is guided toward the final gear by using the oil guide wall to guide the oil to the oiling rib protruding into the gear case so as to extend toward the final gear, thus ensuring the lubrication performance.

According to the second aspect of the present invention, because the breather chamber extending in the up-and-down direction in a position above the drive gear and the counter gears and forward of the final gear is formed in the gear case attached to a rear portion of the power-transmission case containing a belt-type continuously variable transmission, by placing the rotation axis of the final gear at a higher level than the rotation axes of the drive gear and the counter gears, this makes it possible to ensure space for forming the breather chamber extending in the up-and-down direction and configured to achieve sufficient gas-liquid separation capability, on front of the final gear and above the drive gear and the counter gear while avoiding an increase in size of the gear case, resulting in an enhancement of gas-liquid separation capability.

According to the third aspect of the present invention, the oiling rib is hung down from the ceiling wall of the gear case between the breather chamber and the oil guide wall and a leading end of oiling rib is located near the tooth tips of the final gear. Because of this, while avoiding an increase in size of the gear case, the area of the oiling rib facing the oil guide wall can be ensured, so that a larger amount of oil can be collected and caught by use of the oiling rib and then fall in drops toward the final gear, thus increasing the lubricating property.

According to the fourth aspect of the present invention, the final gear is mounted on the axle in a position closer to the bearing member disposed between the main case forming a part of the gear case and one end of the axle. The main case is provided with the surrounding wall extending toward the final gear so as to surround the axle at least from below, and the introduction walls arranged below the oiling rib so as to guide the oil toward the surrounding wall. As a result, the oil falling in drops from the oiling rib is guided from the introduction walls toward the surrounding wall, thus making it possible to effectively guide the oil into between the main case and the axle to improve the lubrication performance.

According to fifth aspect of the invention, since the introduction walls extend in the fore-and-aft direction, the lubrication performance can be further increased by guiding a larger amount of oil dripping from the oiling rib toward the surrounding wall.

According to the sixth aspect of the present invention, the oil guided by the oil guide wall collides with the sensor, thereby producing the cleaning effect of oil on the sensor. Also, the oil after colliding with the sensor and then dispersing sideways produces the cleaning effect of oil on the sensor. Also, the oil after colliding with the sensor and then dispersing sideways moves along the inner surface of the main case toward the oiling rib, thus allowing a larger amount of oil to fall in drips from the oiling rib so as to improve the lubricating property.

### [Brief Description of Drawings]

Fig. 1 is a left side view of a motorcycle.
Fig. 2 is a sectional view of Fig. 1.
Fig. 3 is an enlarged view of an area indicated by arrow 3 of Fig. 2.
Fig. 4 is a sectional view taken along line 4-4 of Fig. 2.
Fig. 5 is a sectional view taken along line 5-5 of Fig. 2.
Fig. 6 is a view of a state without a gasket shown in Fig. 5.
Fig. 7 is a sectional view taken along line 7-7 of Fig. 4.
Fig. 8 is a sectional view taken along line 8-8 of Fig. 4.
Fig. 9 is a sectional view taken along line 9-9 of Fig. 6.

### [Description of Embodiments]

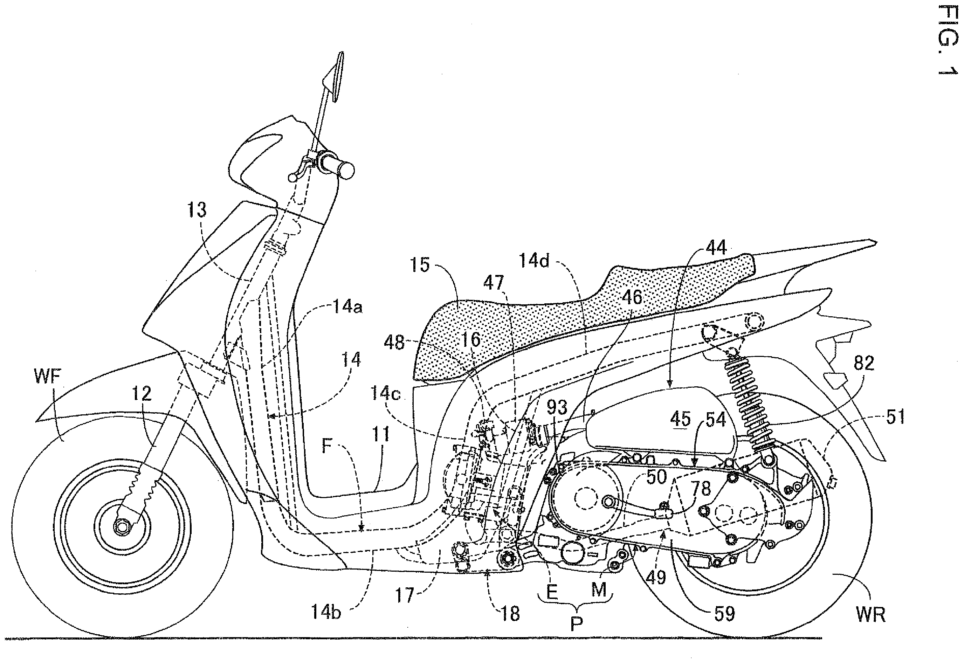

Embodiments according to the present invention will be described with reference to Fig. 1 to Fig. 9. Incidentally, in the following description, each of the fore-and-aft, up-and-down and right-and-left directions shall refer to a direction when viewed from an occupant on the motorcycle.

Initially, in Fig. 1, the small vehicle is a scooter-type motorcycle having a low floor 11. A vehicle-body frame F of the motorcycle includes a head pipe 13 supporting steerably front forks 12 journaling a front wheel WF, and a pair of right and left side frames 14 joined at their front ends to the head pipe 13. The side frame 14 has, as an integrated piece, a down frame 14a which hangs downward from the head pipe 13, a lower frame 14b which is connected to the bottom end of the down frame 14a and formed to extend rearward under the floor 11 and to have a rear half inclined upward and rearward, a rising frame 14c which is connected to a rear end of the lower frame 14b and rises upward at a more rearward position than the floor 11, and a seat rail 14d which extends rearward from the rear end of the rising frame 14c in order to support an occupant seat 15. The side frame 14 is shaped by bending a single pipe.

Rear sub-frames 16 are provided between the rear portions of the lower frames 14b and the front portions of the seat rails 14d in the side frames 14 so as to be situated under the seat rails 14d and rearward of the rising frames 14c in the side frames 14. Pivot plates 17 are placed between both the side frames 14 and both the rear sub-frames 16.

The pivot plates 17 support vertically swingably a power unit P, which is made up of an engine E placed forward of a rear wheel WR which is the drive wheel and a power transmission M placed on the left side of the rear wheel WR, through a link mechanism 18 to allow it to swing in the up-and-down direction. The rear wheel WR is journaled to a rear portion of the power unit P.

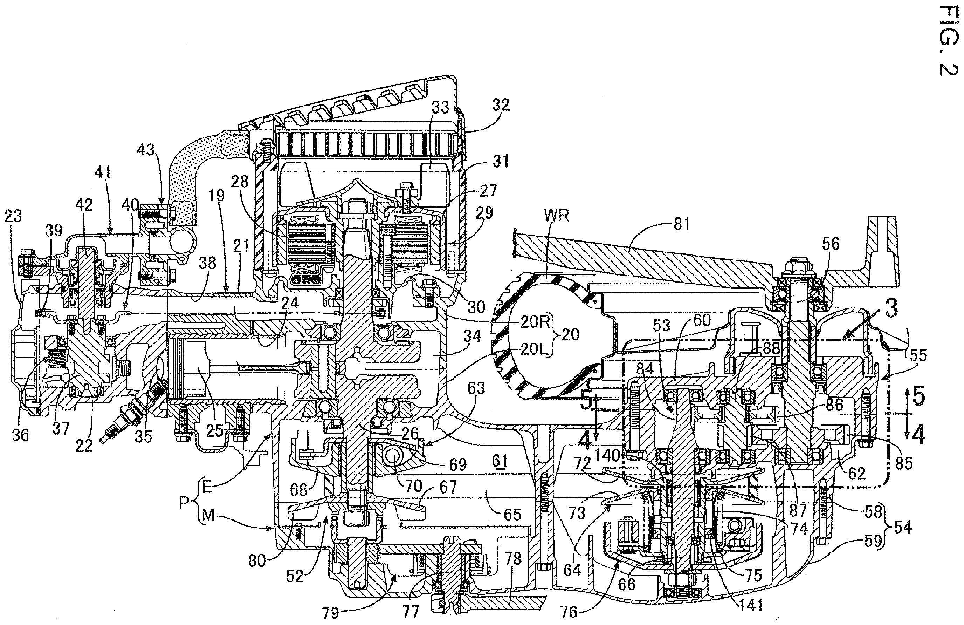

In Fig. 2, an engine body 19 of the engine E which is a single-cylinder, 4-cycle water-cooled engine includes a crankcase 20 which is made up of two split right and left crankcase halves 20L, 20R coupled together and has crank chambers 3, 4 formed therein, a cylinder block 21 which is coupled to the crankcase 20, a cylinder head 22 which is coupled to the cylinder block 21, and a head cover 23 which is coupled to the cylinder head 22. A piston 25 is slidably fitted in a cylinder bore 24 having a slightly forward and upward tilted cylinder axis and formed in the cylinder block 21. The crankcase 20 supports rotatably a crankshaft 26 extending in the width direction of the vehicle-body frame F, and the piston 25 is connected to the crankshaft 26.

An outer rotor 27 is fixed to a right end of the crankshaft 26 extending rotatably through the right crankcase half 20R in the crankcase 20. An inner stator 28, which is enclosed with the outer rotor 27 in such manner as to, together with the outer rotor 27, form a generator 29, is fixed to a support plate 30 fastened to the right crankcase half 20R.

A tubular generator cover 31 is coupled to the right crankcase half 20R and surrounds the generator 29. A radiator 32 is arranged on the right side of the generator cover 31. A cooling fan 33 for flowing cooling air to the radiator 32 is secured to the crankshaft 26 in a position between the generator 29 and the radiator 32.

Now, a valve gear 36 is held between the cylinder head 22 and the head cover 23 for operation of opening/closing an intake valve (not shown) for controlling the air intake into a combustion chamber 35 which is formed between the cylinder block 21 and the cylinder head 22 to be bordered by the top of the piston 25, and an exhaust valve (not shown) for controlling the exhaust from the combustion chamber 35. The valve gear 36 includes a camshaft 37 which is movably supported in the cylinder head 22 to be able to rotate around the axis parallel to the crankshaft 26.

A timing transmission 40 is installed between the crankshaft 26 and the camshaft 37 and includes a cam chain 39 running in a cam chain chamber 38 which is formed in an area from the crankcase 20 to the cylinder head in the engine body 19. The timing transmission 40 transmits power from the crankshaft 26 to the camshaft 37 at a reduction ratio of one half. A pump shaft 42 of a cooling-water pump 41 mounted on the right side face of the cylinder head 22 is coupled coaxially to the camshaft 37 while being prevented from rotating relative to it. The cooling-water pump 41 is connected to the radiator 32 through a thermostat 43.

Referring to Fig. 1, an intake device 44 is connected to an upper side face of the cylinder head 22 in the engine body 19. The intake device 44 includes an air cleaner 45, an inlet pipe 46 connected at the upstream end to the air cleaner 45, and a throttle body 47 provided between the downstream end of the inlet pipe 46 and the cylinder head 22. A fuel injection valve 48 for fuel injection into air measured by the throttle body 47 is mounted to the cylinder head 22. An exhaust device 49 connected to a lower side face of the cylinder head 22 includes an exhaust pipe 50 connected to a lower portion of the cylinder head 22 and extending from a right-side lower portion of the engine body 19 toward the right side of the rear wheel WR, and an exhaust muffler 51 connected to the exhaust pipe 50 and placed on the right side of the rear wheel WR.

The power transmission M includes a belt-type continuously variable transmission 52 arranged contiguous to the crankcase 20 and contained in the power-transmission case 54 extending toward the left side of the rear wheel WR, and a gear mechanism 53 reducing the speed output from the continuously variable transmission 52 for transmission of the output to the axle 56 of the rear wheel WR. The gear mechanism 53 is held within the gear case 55 attached to a rear portion of the power-transmission case 54.

The power-transmission case 54 is made up of a main case 58 integrally adjoining the left crankcase half 20L of the crankcase 20 and extending rearward toward the left side of the rear wheel WR, and a first cover 59 covering the main case 58 from without. The air cleaner 45 of the intake device 44 is supported by the main case 58 placed under the air cleaner 45. The gear case 55 is made up of a rear portion of the main case 58 and a second cover 60 joined to the rear portion of the main case 58 from within. A transmission chamber 61 holding the belt-type continuously variable transmission 52 is formed within the power-transmission case 54, while a gear chamber 62 holding the gear mechanism 53 is formed within the gear case 55 so as to be located away from the crank chamber 34 in the crankcase 20.

The belt-type continuously variable transmission 52 includes a drive pulley 63 mounted on the crankshaft 26, a driven pulley 64 mounted on a power-transmission shaft 66, and an endless V belt 65 looped around the drive pulley 63 and the driven pulley 64. The drive pulley 63 is provided at one end of the crankshaft 26 extending from the crankcase 20 into the transmission chamber 61, while the driven pulley 64 is provided on the power-transmission shaft 66 having the axis parallel to the crankshaft 26 and supported rotatably by the main case 58, the first cover 59 and the second cover 60.

The drive pulley 63 includes a fixed pulley half 67 fixed to the crankshaft 26 and a movable pulley half 68 which is able to move toward/away from the fixed pulley half 67. The movable pulley half 68 is driven in the axis direction by centrifugal force which acts on a weight roller 70 disposed between the movable pulley half 68 and a ramp plate 69 secured to the crankshaft 26.

The driven pulley 64 includes a fixed pulley half 72 secured to a cylindrical inner tube 140 which coaxially surrounds the power-transmission shaft 66 while being relatively rotatably supported by the power-transmission shaft 66, and a movable pulley half 73 which is able to move relative to the inner tube 140 in the axis direction and rotate relative to the inner tube 140 and is allowed to move toward/away from the fixed pulley half 72 by being secured to an outer tube 141 coaxially surrounding the inner tube 140. The V belt 65 is looped between the fixed pulley half 72 and the movable pulley half 73. In addition, a torque cam mechanism 74, which causes a component of force in the axis direction to act on between both the pulley halves 72, 73 in accordance with a relative-rotation phase difference between the movable pulley half 73 and the fixed pulley half 72, is provided between the inner tube 140 and the outer tube 141. The movable pulley half 73 is elastically urged toward the fixed pulley half 72 by a coil spring 75, and a centrifugal clutch 76 is mounted between the inner tube 140 and the power-transmission shaft 66 and is switched to the power transmission state upon the engine speed exceeding a set engine speed.

Now, the fixed pulley half 72 and the movable pulley half 73 are used by turning pulley halves of identical shape around 180 degrees. The inner peripheral portion of the fixed pulley half 72 is fixedly attached to one end portion of the inner tube 140 by ring mash welding. Also, the inner peripheral portion of the movable pulley half 73 is fixedly attached to one end portion of the outer tube 141 by the ring mash welding. In this manner, the pulley halves of identical shape are used to form the driven pulley 64, thus achieving a reduction in the number of kinds of components. Ring mash welding is employed for fixed attachment, thus achieving an increase in productivity.

Then, a distance between the fixed pulley half 72 and the movable pulley half 73 in the driven pulley 64 in the axis direction is determined by a balance among an axial force generated by the torque cam mechanism 74, an axial elastic force generated by the coil spring 75 and a force from the V belt 65 acting in the direction of increasing the distance between the fixed pulley half 72 and the movable pulley half 73. By arranging the movable pulley half 68 closer to the fixed pulley half 67 in the drive pulley 63, the loop radius of the V belt 65 over the drive pulley 63 is increased, whereupon the loop radius of the V belt 65 over the driven pulley 64 is decreased.

The first cover 59 in the power-transmission case 54 supports rotatably a kick shaft 77. A kick pedal 78 is provided at the outer end of the kick shaft 77. A kick starting device 79 is provided between the kick shaft 77 and the crankshaft 26 on the inner surface of the first cover 59, and allows the rotating power of the kick shaft 77 in response to depression operation of the kick pedal 78 to be transmitted to the crankshaft 26. A plurality of fins 80 protrude from the outer surface of the fixed pulley half 67 in the drive pulley 63 for causing the fixed pulley half 67 to serve a function as a cooling fan flowing cooling air into the power-transmission case 54.

One end of the axle 56 of the rear wheel WR extends hermetically through the second cover 60 into the gear case 55, and is rotatably supported by the main case 58 and the second cover 60. The gear mechanism 53 mounted between the power-transmission shaft 66 and the axle 56 is held in the gear chamber 62.

A swing arm 81 arranged contiguous to the crankcase 20 of the engine body 19 is placed on the right side of the rear wheel WR. The other end of the axle 56 is rotatably supported by a rear portion of the swing arm 81. In addition, as shown in Fig. 1, a rear cushion unit 82 is provided between a rear portion of the main case 58 of the power-transmission case 54 and a rear portion of the left seat rail 14d in the vehicle-body frame F.

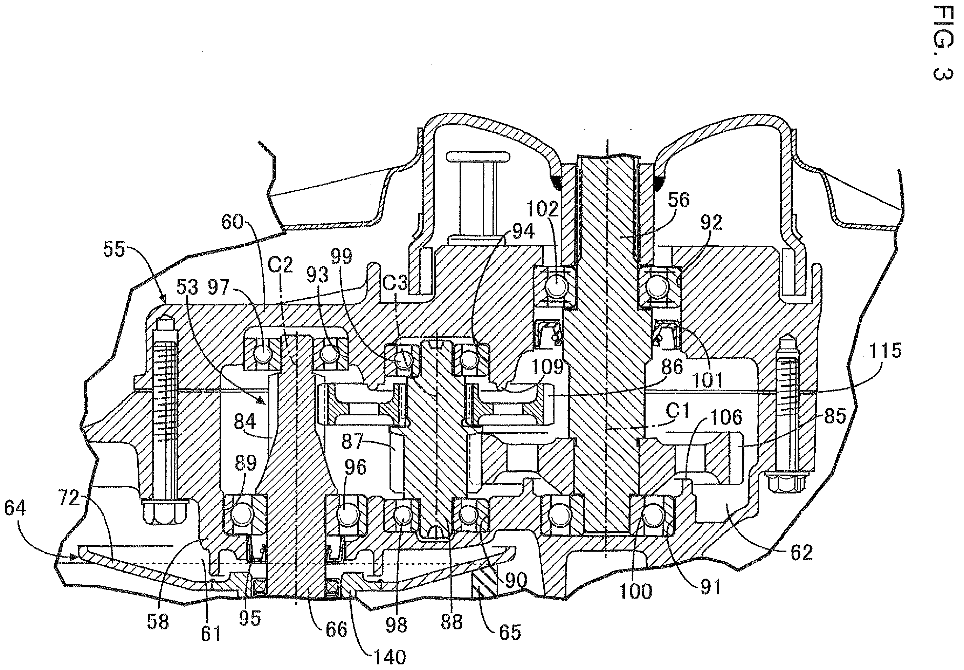

In Fig. 3, the gear mechanism 53 has a drive gear 84 mounted integrally on the power-transmission shaft 66 to which the rotating power is transmitted from the crankshaft 26, a final gear 85 installed on the axle 56 of the rear wheel WR and first and second counter gears 86, 87 arranged between the final gear 85 and the drive gear 84, and is contained in the gear chamber 62.

Both the ends of the counter shaft 88 are rotatably supported by the main case 58 and the second cover 60 which cooperate to form the gear case 55. The first counter gear 86 of a larger diameter than that of the drive gear 84 is fixed to the counter shaft 88 in such a manner as to mesh with the drive gear 84, while the second counter gear 87 of a smaller diameter than those of the first counter gear 86 and the final gear 85 is mounted integrally on the counter shaft 88 in such a manner as to mesh with the final gear 85.

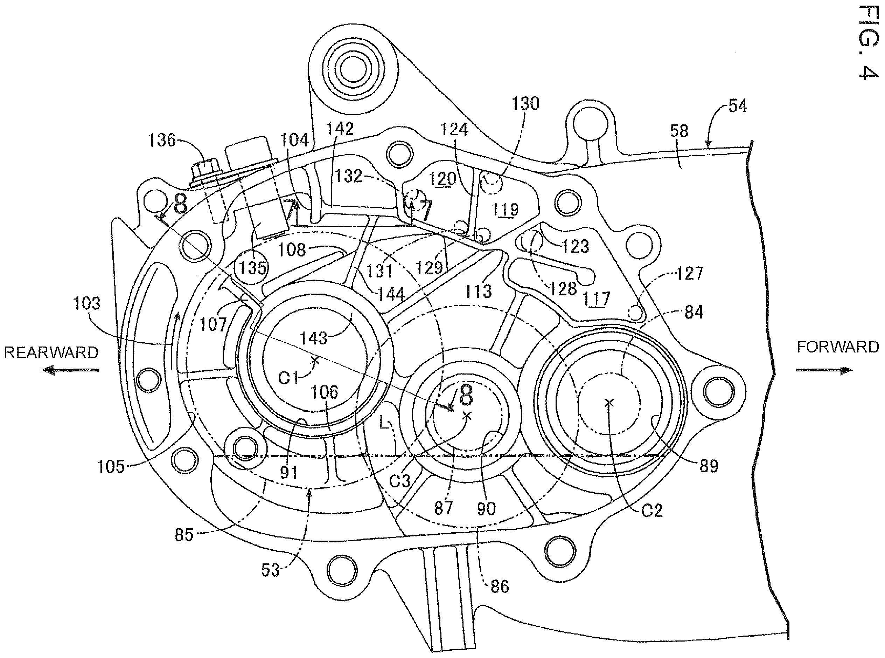

Additionally referring to Fig. 4, a first through hole 89 is formed in the main case 58 to allow a middle portion of the power-transmission shaft 66 to extends rotatably through the first through hole 89. A first supporting recess 90 facing the gear chamber 62 is provided in the main case 58 such that one end of the counter shaft 88 is inserted and disposed in the first supporting recess 90, while a second supporting recess 91 facing the gear chamber 62 is provided in the main case 58 such that one end of the axle 56 is inserted and disposed in the second supporting recess 91.

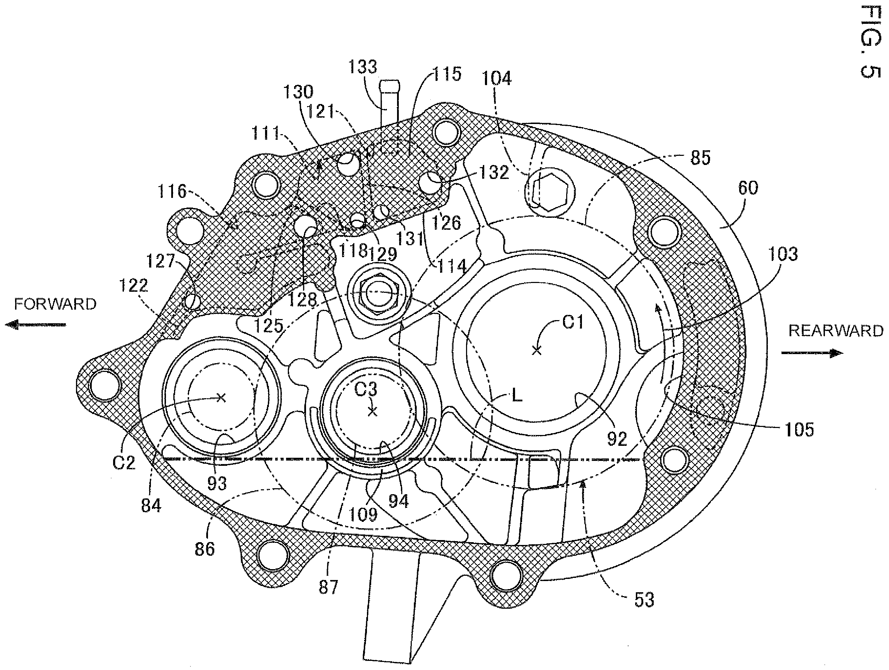

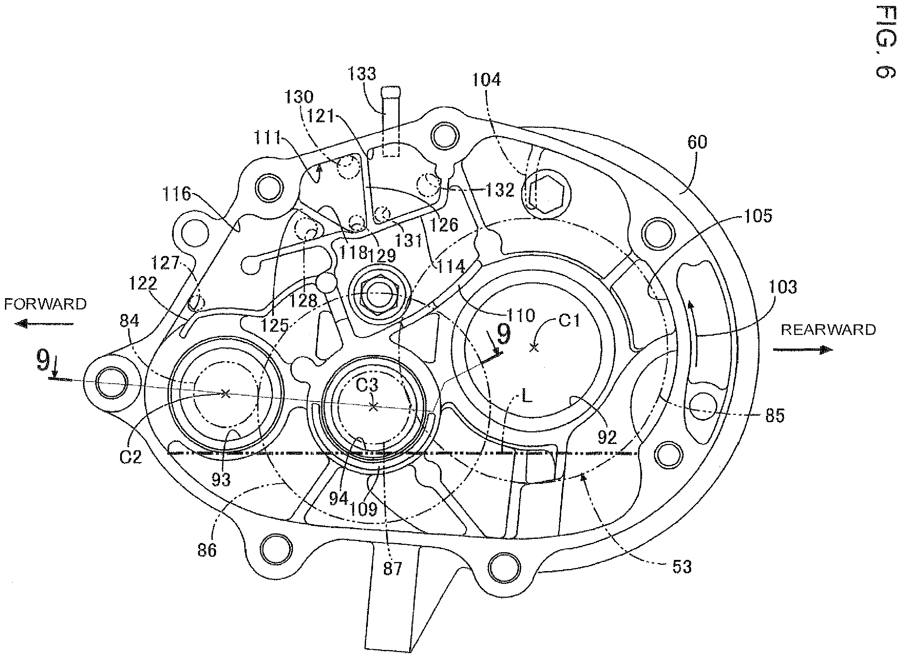

Referring to Fig. 5 and Fig. 6 together, a second through hole 92 is formed in the second cover 60 to allow a middle portion of the axle 56 to extends rotatably through the second through hole 92. A third supporting recess 93 facing the gear chamber 62 is provided in the second cover 60 such that the other end of the power-transmission shaft 66 is inserted and disposed in the third supporting recess 93, while a fourth supporting recess 94 facing the gear chamber 62 is provided in the second cover 60 such that the other end of the counter shaft 88 is inserted and disposed in the fourth supporting recess 94.

A ring-shaped sealing member 95 and a ball bearing 96 in order from the transmission chamber 61 are interposed between the inner periphery of the first through hole 89 and the outer periphery of the power-transmission shaft 66, while a ball bearing 97 is interposed between the outer periphery of the other end of the power-transmission shaft 66 and the inner periphery of the third supporting recess 93. Also, a ball bearing 98 is interposed between the outer periphery of one end of the counter shaft 88 and the inner periphery of the first supporting recess 90, while a ball bearing 99 is interposed between the outer periphery of the other end of the counter shaft 88 and the inner periphery of the fourth supporting recess 94. Then, a ball bearing 100 is interposed between the outer periphery of one end of the axle 56 of the rear wheel WR and the inner periphery of the second supporting recess 91, while a ring-shaped sealing member 101 and a ball bearing 102 in order from the gear chamber 62 are interposed between the outer periphery of the middle portion of the axle 56 and the inner periphery of the second through hole 92.

The power-transmission shaft 66, the counter shaft 88 and the axle 56 are placed such that the power-transmission shaft 66, the counter shaft 88 and the axle 56 are arranged in this order from the front, and the rotation axis of the axle 56, or equivalently, a rotation axis C1 of the final gear 85 is located on a higher level than the locations of the rotation axis of the power-transmission shaft 66, or equivalently, a rotation axis C2 of the drive gear 84 and the rotation axis of the counter shaft 88, or equivalently, a rotation axis C3 of the first and second counter gears 86, 87.

Oil used for lubrication is stored within the gear chamber 62, in which a lower portion of the final gear 85 of the largest diameter of those of the gears 84 to 87 forming the gear mechanism 53 is immersed in the oil filling up to level L in a lower portion within the gear chamber 62.

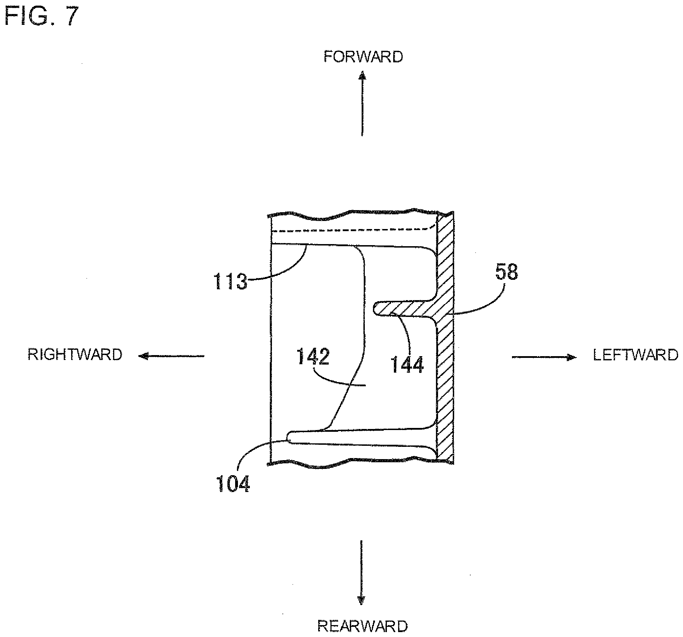

Additionally referring to Fig. 7, an oiling rib 104 protrudes in the gear case 55. The oiling rib 104 is disposed above the final gear 85 and formed to extend toward the final gear 85 so that the oil delivered by the tooth tips of the final gear 85 returns toward the final gear 85 when the final gear 85 rotates in a rotation direction 103 (see Fig. 4) indicated by the arrow during the forward travel of the motorcycle.

The gear case 55 is provided with an oil guide wall 105 which is formed in an arc shape along the tooth tips of the final gear 85 so as to guide the oil stored in the lower portion within the gear chamber 62 toward the oiling rib 104. In the embodiment, the oil guide wall 105 is provided flush with the main case 58 and the second cover 60 which cooperate to form the gear case 55.

Now, the final gear 85 is mounted on the axle 56 in a position closer to the ball bearing 100 which is a bearing member interposed between one ends of the main case 58 of the gear case 55 and the axle 56. The oiling rib 104 extending downward from the ceiling wall of the gear case 55 is formed on the main case 58 of the gear case 55 and the leading end of the oiling rib 104 is located near the tooth tips of the final gear 85.

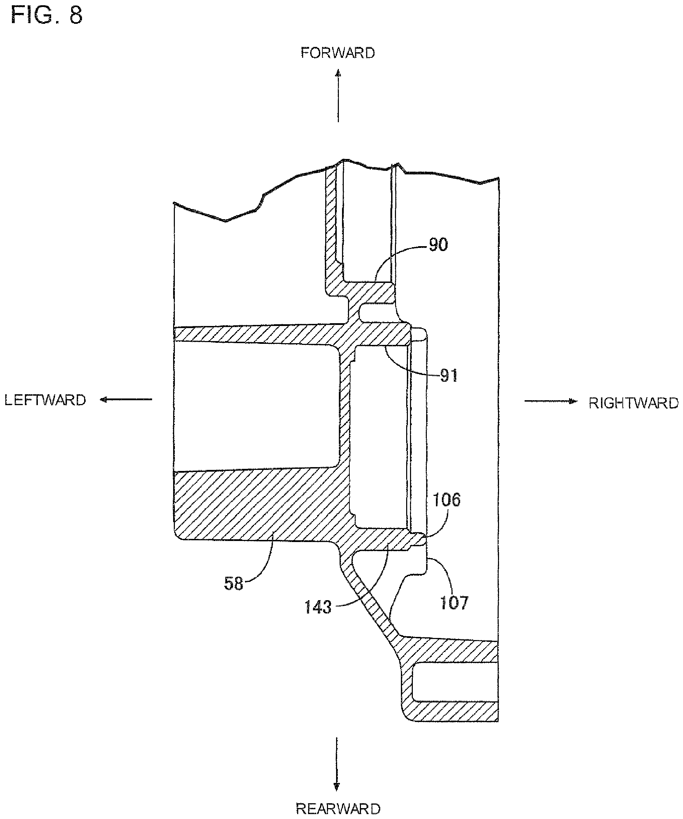

Additionally referring to Fig. 8, the main case 58 of the gear case 55 is provided with a surrounding wall 106 extending toward the final gear 85 to surround the axle 56 at least from below, and introduction walls 107, 108 disposed below the oiling rib 104 so as to guide the oil toward the surrounding wall 106.

The surrounding wall 106 protrudes from the opening edge of the second supporting recess 91 provided in the main case 58 for supporting one end of the axle 56, and, in the embodiment, is formed in an arc shape surrounding a lower half of the axle 56 and a rear portion of the axle 56. Also, the introduction wall 107 integrally adjoins the rear end of the surrounding wall 106, and is formed to be inclined forward and downward while extending in the fore-and-aft direction. The introduction wall 108 is disposed above the surrounding wall 106 and directly below the oiling rib 104, and is formed to be inclined rearward and downward toward the rear end of the surrounding wall 106 while extending in the fore-and-aft direction.

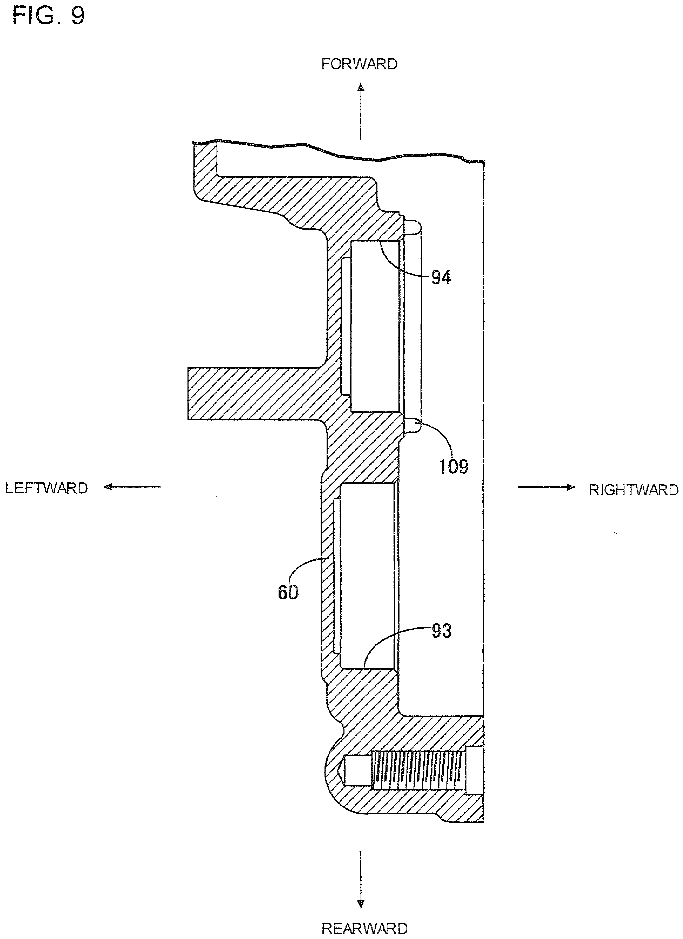

Additionally referring to Fig. 9, the second cover 60 of the gear case 55 is provided integrally with an arc-shaped surrounding wall 109 extending toward the first counter gear 86 to surround the counter shaft 88 from below such that the surrounding wall 109 protrudes from the opening edge of the fourth supporting recess 94 formed in the second cover 60 for supporting the other end of the counter shaft 88.

An introduction wall 110 disposed diagonally upward and rearward of the fourth supporting recess 94 protrudes from the inner surface of the second cover 60. The introduction wall 110 is formed to extend in the fore-and-aft direction while being inclined forward and downward such that the oil falling in drops from an upper portion within the gear case 55 is guided toward the surrounding wall 109.

In the gear case 55 forward of the drive gear 84, the first counter gear 86, the second counter gear 87 and the final gear 85, a breather chamber 111 is formed to extend in the up-and-down direction for emitting gas to the outside in the thermal expansion of gas with a rise in the oil temperature within the gear chamber 62. The oiling rib 104 is disposed between the breather chamber 111 and the oil guide wall 105.

The breather chamber 111 is formed between a portion of the outer peripheral walls of the main case 58 and the second cover 60, and rib-shaped sidewalls 113, 114 located inward of these outer peripheral walls and each protruding into between the main case 58 and the second cover 60. First, third and sixth chambers 116, 118, 121 forming part of the breather chamber 111 is formed between the second cover 60 and a gasket 115 sandwiched between the main case 58 and the second cover 60, while second, fourth and fifth chambers 117, 119, 120 forming part of the breather chamber 111 is formed between the gasket 115 and the main case 58.

A recess 122 is provided in a lower end of the sidewall 113 in the second cover 60. The gas within the gear chamber 62 flows through between the recess 122 and the gasket 115 to be guided into the first chamber 116 of the breather chamber 111.

The main case 58 is provided with a first partition wall 123 connecting the sidewall 113 and the outer peripheral wall of the main case 58 such that the first partition wall 123 abuts on the gasket 115 so as to isolate the second and fourth chambers 117, 119 from each other, and also with a second partition wall 124 interposed between the fourth chamber 119 and the fifth chamber 120 to connect the sidewall 113 and the outer peripheral wall of the main case 58. The second partition wall 124 is formed such that a gap is formed to permit a flow of gas between the second partition wall 124 and the gasket 115 in order that the gas flows from the fourth chamber 119 to the fifth chamber 120.

The second cover 60 is provided with a third partition wall 125 interposed between the first chamber 116 and the third chamber 118 to connect the sidewall 114 and the outer peripheral wall of the second cover 60. The third partition wall 125 is formed such that a gap is formed to permit a flow of gas between the third partition wall 125 and the gasket 115 in order that the gas flows from the first chamber 116 to the third chamber 118. Also the second cover 60 is provided with a fourth partition wall 126 to connect the sidewall 114 and the outer peripheral wall of the second cover 60 such that the fourth partition wall 126 abuts on the gasket 115 so as to isolate the third and sixth chambers 116, 121 from each other.

The gasket 115 is provided with a first through hole 127 for communication between lower portions of the first and second chambers 116, 117, a second through hole 128 for communication between upper portions of the first and second chambers 116, 117, a third through hole 129 for communication between lower portions of the third chamber 118 and the fourth chamber 119, a fourth through hole 130 for communication between upper portions of the third chamber 118 and the fourth chamber 119, a fifth through hole 131 for communication between lower portions of the fifth chamber 120 and the sixth chamber 121, and a sixth through hole 132 for communication between upper portions of the fifth chamber 120 and the sixth chamber 121. The first, third and fifth through holes 127, 129, 131 are of a smaller diameter than that of the second, fourth and sixth through holes 128, 130, 132.

Thus, the gas flowing into the first chamber 116 of the breather chamber 111 flows between the first chamber 116 and the second chamber 117 via the first and second through holes 127, 128. The gas guided from the first chamber 116 to the third chamber 118 is guided to the fourth chamber 119 via the third and fourth through holes 129, 130. The gas guided from the fourth chamber 119 to the fifth chamber 120 is guided to the sixth chamber 121 via the fifth and sixth through holes 131, 132. The first to sixth chambers 116 to 121 communicate with each other in a labyrinth manner, so that the oil component entrained in the gas is separated from the gas within the breather chamber 111. Also, the oil separated from the gas in the first to sixth chambers 116 to 121 flows sequentially into the chambers in order from higher to lower levels via the first, third and fifth through holes 127, 129, 131, to be returned from the recess 122 at the lower end of the sidewall 113 to the gear chamber 62.

The second cover 60 is provided with a lead-out tube 133 having a leading end protruding into the sixth chamber 121 such that the lead-out tube 133 stands up from the second cover 60 in the upward direction. A breather tube, not shown, is connected to an outer end of the lead-out tube 133.

The main case 58 of the gear case 55 is provided integrally with a rib-shaped coupling wall 142 connecting the oiling rib 104 and the sidewall 113, and a rib-shaped coupling wall 144 connecting the coupling wall 142 and a cylindrical bearing housing 143 formed integrally with the main case 58 in such a manner as to form the second supporting recess 91. The oiling rib 104, the sidewall 113 and the bearing housing 143 are coupled to each other through the coupling walls 142, 144. Thus, the oiling rib 104, the sidewall 113 and the bearing housing 143 can be reinforced and run performance in the process of casting the main case 58 can be increased.

A sensor, for example, a wheel speed sensor 135 is attached to the main case 58 of the gear case 55 with a bolt 136 such that the leading end of the sensor is placed near the tooth tips of the final gear 85. The wheel speed sensor 135 is disposed between the oil guide wall 105 and the oiling rib 104 and downstream of the oil guide wall 105 in the flow direction of the oil flowing between the oil guide wall 105 and the final gear 85.

Next, operation of the embodiment will be described. The gear chamber 62 formed within the gear case 55 contains the gear mechanism 53 which has the drive gear 84 mounted integrally on the power-transmission shaft 66 to which rotation power is transmitted from the crankshaft 26, the final gear 85 provided on the axle 56 of the rear wheel WR, and the first and second counter gears 86, 87 arranged between the final gear 85 and the drive gear 84. The rotation axis C1 of the final gear 85 with the lower portion being immersed into the oil stored in a lower portion within the gear chamber 62 is placed at a higher level than the rotation axis C2 of the drive gear 84 and the rotation axis C3 of the first and second counter gears 86, 87. The oiling rib 104 disposed above the final gear 85 and extending toward the final gear 85 protrudes into the gear case 55. The oil guide wall 105 formed in an arc shape along the tooth tips of the final gear 85 so as to guide the oil stored in the lower portion within the gear chamber 62 toward the oiling rib 104 is provided in the gear case 55.

Accordingly, rotational friction is reduced by decreasing the area of the final gear 85 immersed into the oil and reducing the amount of oil delivered to the final gear 85. The splashed oil is guided toward the final gear 85 by using the oil guide wall 105 to guide the oil to the oiling rib 104 protruding into the gear case 55 so as to extend toward the final gear 85, thus ensuring the lubrication performance.

The gear case 55 is fixed on the rear portion of the power-transmission case 54 provided contiguous to the crankcase 20 of the engine body 19, extending toward the side of the rear wheel WR and containing the belt-type continuously variable transmission 52 placed between the crankshaft 26 and the drive gear 84. The breather chamber 111 extending in the up-and-down direction is formed in the gear case 55 above the drive gear 84 and the first and second counter gears 86, 87 and forward of the final gear 85. Because of these facts, by placing the rotation axis C1 of the final gear 85 at a higher level than the rotation axes C2, C31 of the drive gear 84 and the counter gears 86, 87, this makes it possible to ensure space for the breather chamber 111 extending in the up-and-down direction and configured to achieve sufficient gas-liquid separation capability, on front of the final gear 85 and above the drive gear and the counter gear while avoiding an increase in size of the gear case 55, resulting in an enhancement of gas-liquid separation capability.

The oiling rib 104 placed between the breather chamber 111 and the oil guide wall 105 is hung downward from the ceiling wall of the gear case 55 and has a leading end located near the tooth tips of the final gear 85. Because of this, while avoiding an increase in size of the gear case 55, the area of the oiling rib 104 facing the oil guide wall 105 can be ensured, so that a larger amount of oil can be collected and caught by use of the oiling rib 104 and then fall in drops toward the final gear 85, thus increasing the lubricating property.

The gear case 55 is made up of the main case 58 forming part of the power-transmission case 54 and integrally adjoining the crankcase 20, and the cover 60 coupled to the rear portion of the main case 58 so that the gear chamber 62 is formed between the main case 58 and the cover 60. One end of the axle 56 of the rear wheel WR is rotatably supported through the ball bearing 100 by the main case 58. The final gear 85 is mounted on the axle 56 in a position closer to the ball bearing 100. The main case 58 is provided with the surrounding wall 106 extending toward the final gear so as to surround the axle 56 at least from below, and the introduction walls 107, 108 arranged below the oiling rib 104 so as to guide the oil toward the surrounding wall 106. As a result, the oil falling in drops from the oiling rib 104 is guided from the introduction walls 107, 108 toward the surrounding wall 106, thus making it possible to effectively guide the oil into between the main case 58 and the axle 56 to improve the lubrication performance.

Also, since the introduction walls 107, 108 are formed to extend in the fore-and-aft direction, the lubrication performance can be further increased by guiding a larger amount of oil dripping from the oiling rib 104 toward the surrounding wall 106.

In addition, the oiling rib 104 protrudes into the main case 58, and the wheel speed sensor 135, which is placed between the guide wall 105 and the oiling rib 104 on the downstream side of the oil guide wall 105 in a flow direction of the oil flowing between the oil guide wall 105 and the final gear 85, is installed on the main case 58 such that the leading end of the wheel speed sensor 135 is located near the tooth tips of the final gear 85. Because of this, the oil guided by the oil guide wall 105 collides with the wheel speed sensor 135, thereby producing the cleaning effect of oil on the wheel speed sensor 135. Also, the oil after colliding with the wheel speed sensor 135 and then dispersing sideways moves along the inner surface of the main case 58 toward the oiling rib 104, thus allowing a larger amount of oil to fall in drips from the oiling rib 104 so as to improve the lubricating property.

Up to this point an embodiment of the present invention has been described, but the present invention is not limited to the embodiment and various changes in design can be made without departing from the scope of the invention as defined by the appended claims.

For example, the present invention can be applied to a power unit for three-wheeled vehicles as well as a motorcycle shown in the embodiment, and the present invention can be also applied to a power unit with a gear chamber separated from a crank chamber in a crankcase.

### [Reference Sign List]

- 19 ...: Engine body
- 20 ...: Crankcase
- 26 ...: Crankshaft
- 34 ...: Crank chamber
- 52 ...: Belt-type continuous variable transmission
- 53 ...: Gear mechanism
- 54 ...: Power-transmission case
- 55 ...: Gear case
- 56 ...: Axle
- 58 ...: Main case
- 60 ...: Second cover which is cover
- 62 ...: Gear chamber
- 84 ...: Drive gear
- 85 ...: Final gear
- 86, 87 ...: Counter gear
- 100 ...: Ball bearing which is bearing member
- 104 ...: Oiling rib
- 105 ...: Oil guide wall
- 106 ...: Surrounding wall
- 107, 108 ...: Introduction wall
- 111 ...: Breather chamber
- 135 ...: Wheel speed sensor which is sensor
- C1 ...: Rotation axis of final gear
- C2 ...: Rotation axis of drive gear
- C3 ...: Rotation axis of counter gear
- P ...: Power unit
- WR ...: Rear wheel which is drive wheel

## Claims

1. Power unit for a small vehicle comprising:
a gear chamber (62) that is formed within a gear case (55) attached to an engine body (19) including a crankcase (20) with a crank chamber (34) formed therein and is isolated from the crank chamber (34); and
a gear mechanism (53) that has a drive gear (84) to which power is transmitted from a crankshaft (26) rotatably supported in the crankcase (20), a final gear (85) mounted on an axle (56) of a drive wheel (WR), and counter gears (86, 87) arranged between the final gear (85) and the drive gear (84) and is contained within the gear chamber (62),
wherein: a rotation axis (C1) of the final gear (85) having a lower portion immersed in oil stored in a lower portion within the gear chamber (62) is placed at a higher level than a rotation axis (C3) of the counter gears (86, 87);
an oiling rib (104) placed above the final gear (85) and extending toward the final gear (85) protrudes into the gear case (55);
the gear case (55) is provided with an oil guide wall (105) formed in an arc shape along tooth tips of the final gear (85) to guide oil stored in the lower portion within the gear chamber (62) to the oiling rib (104);
the gear case (55) is attached to a rear portion of a power-transmission case (54) adjoining the crankcase (20), extending toward a side of the drive wheel (WR) and containing a belt-type continuously variable transmission (52) placed between the crankshaft (26) and the drive gear (84), and a breather chamber (111) extending in an up-and-down direction is formed above the drive gear (84) and the counter gears (86, 87) and in front of the final gear (85) in the gear case (55);
the oiling rib (104) placed between the breather chamber (111) and the oil guide wall (105) is hung down from a ceiling wall of the gear case (55) and has a leading end placed near the tooth tips of the final gear (85); and
the gear case (55) includes a main case (58) forming a part of the power-transmission case (54) and integrally adjoining the crankcase (20), and a cover (60) coupled to a rear portion of the main case (58) and causing the gear chamber (62) to be formed between the main case (58) and the cover (60), one end of the axle (56) is rotatably supported through a bearing member (100) by the main case (58), **characterised in that** the rotation axis (C1) of the final gear (85) is placed at a higher level than a rotation axis (C2) of the drive gear (84), the final gear (85) is mounted on the axle (56) in a position closer to the bearing member (100), and the main case (58) is provided with a surrounding wall (106) extending toward the final gear (85) and surrounding the axle (56) at least from below, and introduction walls (107, 108) placed below the oiling rib (104) to guide oil toward the surrounding wall (106).

2. Power unit for a small vehicle according to claim 1, **characterised in that** the introduction walls (107, 108) are formed to extend in a fore-and-aft direction.

3. Power unit for a small vehicle according to claim 1 or 2, **characterised in that** the oiling rib (104) protrudes into the main case (58), and a sensor (135) placed between the guide wall (105) and the oiling rib (104) on a downstream side of the oil guide wall (105) in a flow direction of oil flowing between the oil guide wall (105) and the final gear (85) is mounted to the main case (58) and has a leading end placed near tooth tips of the final gear (85).

## Patentansprüche

1. Antrieb für ein Kleinfahrzeug, umfassend:
einen Getrieberaum (62), der innerhalb eines Getriebegehäuses (55), das an einem Motorkörper (19) angebunden ist, geformt ist und ein Kurbelgehäuse (20) mit einem darin geformten Kurbelraum (34) umfasst und von dem Kurbelraum (34) isoliert ist; und
einen Getriebemechanismus (53), der ein Antriebsgetriebe (84) aufweist, auf das Kraft von einer im Kurbelraum (20) drehbar gelagerten Kurbelwelle (26) übertragen wird, ein auf einer Achse (56) eines Antriebsrades (WR) montiertes Endantriebszahnrad (85), und Vorgelegeräder (86, 87), die zwischen dem Endantriebszahnrad (85) und dem Antriebsgetriebe (84) angeordnet sind und der im Getrieberaum (62) enthalten ist,
wobei: eine Rotationsachse (C1) des Endantriebszahnrad (85) ein in Öl getauchtes unteres Teil besitzt, das in einem unteren Teil des Getrieberaums (62) gelagert ist und die auf einer höheren Ebene als die Rotationsachse (C3) der Vorgelegeräder (86, 87) platziert ist;
wobei eine Ölrippe (104), die über dem Endantriebszahnrad (85) platziert ist und sich zu dem Endantriebszahnrad erstreckt, in das Getriebegehäuse (55) ragt;
das Getriebegehäuse (55) mit einer Ölführungswand (105) ausgestattet ist, die in einer Bogenform entlang Zahnspitzen des Endantriebszahnrad (85) gebildet ist, um Öl, das im unteren Teil innerhalb des Getrieberaums (62) gelagert ist, zu der Ölrippe (104) zu führen;
wobei das Getriebegehäuse (55) an einem hintern Teil eines an das Kurbelgehäuse (20) angrenzenden Kraftübertragungsgehäuses (54) befestigt ist, das sich zu einer Seite des Antriebsrades (WR) hin erstreckt und ein stufenlos variables Getriebe (52) vom Riementyp enthält, das zwischen der Kurbelwelle (26) und dem Antriebsgetriebe (84) platziert ist, und eine Entlüftungskammer (111), die sich in einer Aufwärts-Abwärts Richtung erstreckt, die über dem Antriebsgetriebe (84) und den Vorgelegerädern (86, 87) und vor dem Endantriebszahnrad (85) in dem Getriebegehäuse (55) gebildet ist;
wobei die Ölrippe (104), die zwischen der Entlüftungskammer (111) und der Ölführungswand (105) angebracht ist, von einer Deckenwand des Getriebegehäuses (55) herunterhängt und ein vorderes Ende hat, das nah an den Zahnspitzen des Endantriebszahnrad (85) platziert ist; und wobei
das Getriebegehäuse (55) ein Hauptgehäuse (58), das ein Teil von dem Kraftübertragungsgehäuse (54) ist und integral an das Kurbelgehäuse (20) angrenzt, und einen Deckel (60), der mit einem hinteren Teil des Hauptgehäuses (58) verbunden ist, umfasst, wodurch der Getrieberaum (62) zwischen dem Hauptgehäuse (58) und dem Deckel (60) gebildet wird, wobei ein Ende von der Achse (56) durch ein tragendes Bauteil (100) des Hauptgehäuses (58) drehbar gelagert ist, **dadurch gekennzeichnet, dass** die Rotationsachse (C1) des Endantriebszahnrads (85) an einer höheren Ebene als eine Rotationsachse (C2) des Antriebsgetriebes (84) platziert ist, das Endantriebszahnrad (85) auf der Achse (56) in einer Position näher zum tragenden Bauteil (100) montiert ist, und das Hauptgehäuse (58) mit einer umgebenden Wand (106), die sich zu dem Endantriebszahnrad (85) erstreckt und die Achse (56) zumindest von unten umschließt, ausgestattet ist, und Wandeinschübe (107, 108), die unter der Ölrippe (104) platziert sind, um Öl zu der umgebenden Wand (106) zu leiten.

2. Antrieb für ein Kleinfahrzeug nach Anspruch 1, **dadurch gekennzeichnet, dass** die Wandeinschübe (107, 108) so gebildet sind, dass sie sich in einer längsseitigen Richtung erstrecken.

3. Antrieb für ein Kleinfahrzeug nach Anspruch 1 oder 2, **dadurch gekennzeichnet, dass** die Ölrippe (104) in das Hauptgehäuse (58) hineinragt, und dass ein zwischen der Führungswand (105) und der Ölrippe (104), auf einer stromabwärtigen Seite der Ölführungswand (105) in einer Flussrichtung des Öls, das zwischen der Ölführungswand (105) und dem Endantriebszahnrad (85) fließt, platzierter Sensor (135) an dem Hauptgehäuse (58) montiert ist und ein vorderes Ende, das in der Nähe der Zahnspitzen des Endantriebszahnrad (85) platziert ist, hat.

## Revendications

1. Bloc d'alimentation pour un petit véhicule comprenant :
une chambre à engrenage (62) qui est formée au sein d'un carter d'engrenage (55) fixé à un corps de moteur (19) comportant un carter moteur (20) dans lequel est formée une chambre de bras de manivelle (34) et est isolé de la chambre de bras de manivelle (34) ; et
un mécanisme d'engrenage (53) qui a un engrenage d'entraînement (84) auquel une puissance est transmise depuis un vilebrequin (26) supporté en rotation dans le carter moteur (20), un engrenage final (85) monté sur un essieu (56) d'une roue d'entraînement (WR), et des engrenages de renvoi (86, 87) agencés entre l'engrenage final (85) et l'engrenage d'entraînement (84) et est contenu au sein de la chambre d'engrenage (62),
dans lequel : un axe de rotation (C1) de l'engrenage final (85) ayant une portion inférieure immergée dans de l'huile stockée dans une portion inférieure au sein de la chambre d'engrenage (62) est placé à un niveau plus élevé qu'un axe de rotation (C3) des engrenages de renvoi (86, 87) ;
une nervure de lubrification (104) placée au-dessus de l'engrenage final (85) et s'étendant vers l'engrenage final (85) fait saillie dans le carter d'engrenage (55) ;
le carter d'engrenage (55) est pourvu d'une paroi de guidage d'huile (105) formée selon une forme d'arc le long de pointes de dent de l'engrenage final (85) pour guider l'huile stockée dans la portion inférieure au sein de la chambre d'engrenage (62) vers la nervure de lubrification (104) ;
le carter d'engrenage (55) est fixé à une portion arrière d'un carter de transmission de puissance (54) jouxtant le carter moteur (20), s'étendant vers un côté de la roue d'entraînement (WR) et contenant une transmission à variation continue de type courroie (52) placée entre le vilebrequin (26) et l'engrenage d'entraînement (84), et une chambre de reniflard (111) s'étendant dans une direction verticale est formée au-dessus de l'engrenage d'entraînement (84) et des engrenages de renvoi (86, 87) et devant l'engrenage final (85) dans le carter d'engrenage (55) ;
la nervure de lubrification (104) placée entre la chambre de reniflard (111) et la paroi de guidage d'huile (105) est suspendue à une paroi de plafond du carter d'engrenage (55) et a une extrémité avant placée près des pointes de dent de l'engrenage final (85) ; et
le carter d'engrenage (55) comporte un carter principal (58) formant une partie du carter de transmission de puissance (54) et jouxtant d'un seul tenant le carter moteur (20), et un cache (60) couplé à une portion arrière du carter principal (58) et provoquant la formation de la chambre d'engrenage (62) entre le carter principal (58) et le cache (60), une extrémité de l'essieu (56) est supportée en rotation par l'intermédiaire d'un organe de palier (100) par le carter principal (58), **caractérisé en ce que** l'axe de rotation (C1) de l'engrenage final (85) est placé à un niveau plus élevé qu'un axe de rotation (C2) de l'engrenage d'entraînement (84), l'engrenage final (85) est monté sur l'essieu (56) dans une position plus proche de l'organe de palier (100), et le carter principal (58) est pourvu d'une paroi d'encerclement (106) s'étendant vers l'engrenage final (85) et encerclant l'essieu (56) au moins par en dessous, et de parois d'introduction (107, 108) placées en dessous de la nervure de lubrification (104) pour guider l'huile vers la paroi d'encerclement (106).

2. Bloc d'alimentation pour un petit véhicule selon la revendication 1, **caractérisé en ce que** les parois d'introduction (107, 108) sont formées pour s'étendre dans une direction longitudinale.

3. Bloc d'alimentation pour un petit véhicule selon la revendication 1 ou 2, **caractérisé en ce que** la nervure de lubrification (104) fait saillie dans le carter principal (58), et un capteur (135) placé entre la paroi de guidage (105) et la nervure de lubrification (104) sur un côté aval de la paroi de guidage d'huile (105) dans une direction d'écoulement d'huile s'écoulant entre la paroi de guidage d'huile (105) et l'engrenage final (85) est monté sur le carter principal (58) et a une extrémité avant placée près des pointes de dent de l'engrenage final (85).
